# EUROPÄISCHE PATENTSCHRIFT

(11) **EP 0 672 767 B1**
(45) Veröffentlichungstag und Bekanntmachung des Hinweises auf die Patenterteilung: **09.09.1998**
(21) Anmeldenummer: 95102388.6
(22) Anmeldetag: 21.02.1995
(51) Int. Cl.: D01H 4/08, F16H 55/22

(54) **Offenend-Spinnvorrichtung**
Open-end spinning device
Dispositif de filature à bout ouvert

(30) Priorität: 19.03.1994 DE 4409476
(43) Veröffentlichungstag der Anmeldung: 20.09.1995
(73) Patentinhaber: W. SCHLAFHORST AG & CO., D-41061 Mönchengladbach (DE)
(72) Erfinder: Raasch, Hans, D-41239 Mönchengladbach (DE)

(56) Entgegenhaltungen:
- DE-A- 2 314 229
- DE-A- 3 721 949
- DE-A- 4 304 088
- DE-A- 4 323 213

## Beschreibung

Die Erfindung betrifft eine Offenend-Spinnvorrichtung an einer Spinnmaschine zum kontinuierlichen Verspinnen von Textilfasern entsprechend dem Oberbegriff des ersten Anspruchs.

Bei Offenend-Spinnvorrichtungen sind in der Regel die Zuführ-sowie die Auflöseeinrichtungen in einem Deckel untergebracht, der sich vor dem jeweiligen Spinnmittel befindet. Dieser Deckel läßt sich um eine Schwenkachse aufklappen, wodurch das Spinnmittel zugänglich wird. Durch das Aufklappen werden aber auch gleichzeitig die Zuführeinrichtung für das Faserband sowie die Auflöseeinrichtung, die Auflösewalze, zugänglich. Die entsprechenden Einrichtungen lassen sich durch das Aufklappen des Deckels leicht säubern und austauschen. Eine solche Vorrichtung ist beispielsweise aus der DE-AS 23 14 229 bekannt.

Im Gegensatz zu Textilmaschinen mit Einzelantrieb besitzen Offenend-Spinnmaschinen in der Regel Antriebe, welche die gleichgearteten Arbeitsmittel in den jeweiligen Spinnstellen gemeinsam antreiben. So ist es beispielsweise bei den Einzugswalzen für das Faserband sowie bei den Auflöseeinrichtungen der Fall. Die Antriebswelle für die Einzugswalzen zieht sich durch die gesamte Maschine und an jeder Spinnstelle befindet sich eine Schnecke, die ein Schneckenrad antreibt, auf dessen Welle die Einzugswalze der Zuführeinrichtung sitzt. Wird der Deckel einer Spinnstelle geöffnet, schwenkt das Schneckenrad aus der jeweils sie antreibenden Schnecke heraus und wird so vom Antrieb getrennt.

Soll der Deckel wieder geschlossen werden und das Schneckenrad, das die Einzugswalze der Zuführeinrichtung antreibt, wieder mit der Schnecke in Verbindung gebracht werden, so kann der Fall eintreten, daß die Zähne nicht ineinandergreifen, da die Zahnspitzen sich miteinander verklemmen. Bei den üblichen Übersetzungsverhältnissen eines Schneckengetriebes zum Antrieb einer Einzugswalze im Verhältnis 1 : 15 bis 1 : 30 ist das Teilungsmaß, über die Spitzen des Schneckenrades am Kopfkreis gemessen, größer als das Teilungsmaß der Schnecke. Dies ergibt sich daraus, daß die Teilung einer Schnecke und die Teilung, gemessen am Teilkreisdurchmesser des Schneckenrades, gleich sind, daß aber über den größeren Kopfkreisdurchmesser des Schneckenrades gemessen die Teilung größer ist. Dadurch kann beim Eintauchen des Schneckenrades in die Schnecke die Situation eintreten, daß, insbesondere bei einem ungünstigen Übersetzungsverhältnis, zwei Zähne des Schneckenrades auf den Gang oder auf zwei Zähne oder Gänge der Schnecke aufsetzen oder sie übergreifen und sich verkeilen. Bei diesen Stellungen kommt selbst bei Umlauf der Schnecke der völlige Eingriff nicht zustande.

Aus der DE-AS 23 14 229 ist deshalb eine besondere Ausbildung des Schneckenrades bekannt. Außerdem ist der Drehpunkt für den Deckel so gelegt worden, daß das Schneckenrad tangential in die Schnecke einschwenkt. Durch besondere Ausbildung der Zähne und durch Aufbringen einer elastischen Randzone bei den Zähnen wird eine Beschädigung des Antriebsrades der Einzugswalze vermieden.

Eine solche Ausbildung des Antriebsrades der Einzugswalze ist aber nur dann sinnvoll, wenn eine tangentiales Einführen des Antriebsrades in die Schnecke möglich ist.

Eine Anordnung des Deckels, die ein tangentiales Einführen des Schneckenrades in die Schnecke ermöglicht, ist aber aus konstruktiven Gründen nicht immer möglich, so daß das konventionelle senkrechte oder nahezu senkrechte Eintauchen des Antriebsrades in die Schnecke üblich ist. Ein solches senkrechtes oder nahezu senkrechtes Eintauchen des Antriebsrades in die antreibende Schnecke ist aus der nachveröffentlichten DE 43 23 213 A1 (=EP-A-634506) bekannt.

Aufgabe der vorliegenden Erfindung ist es, ein Schneckengetriebe auszubilden, bei dem ein Eintauchen des Schneckenrades in die Schnecke ohne Behinderung möglich ist.

Diese Aufgabe wird erfindungsgemäß durch eine Vorrichtung gelöst, wie sie im Anspruch 1 beansprucht wird.

Erfindungsgemäß sind die Stirnseiten des Schneckengangs der Schnecke oder der Schneckengänge bei mehrgängiger Schnecke spitz zulaufend ausgebildet. Der Abstand zwischen den Spitzen zweier benachbarter Gangwindungen des mindestens einen Schneckenganges wird höchstens so groß gewählt wie der Abstand zweier Spitzen der Zähne des Schneckenrades auf seinem Kopfkreis. Ist der Abstand der Spitzen des Schneckenganges größer, können zwei Zähne gleichzeitig zwischen zwei benachbarte Schneckenwindungen rutschen, wodurch das Schneckenrad eingeklemmt werden kann. Der Abstand der Spitzen des Schneckenganges darf aber auch nicht wesentlich kleiner gewählt werden als der Abstand zweier Zahnspitzen des Schneckenrades, weil ansonsten zwei benachbarte Schneckenwindungen zwischen zwei Schneckenradzähne eingeklemmt werden könnten.

Diese Ausbildung des Schneckenganges oder der Schneckengänge zwingt vorteilhaft die Zähne des eintauchenden Schneckenrades in jeder Stellung zum Abgleiten an den Zahnflanken der Schnecke, damit zu einem erzwungenen Drehen entweder der Schnecke oder des Schneckenrades und damit zu einem geordneten Eintauchen der Zähne des Schneckenrades jeweils zwischen zwei benachbarte Gangwindungen. Die erfindungsgemäße Ausbildung der Flanken zweier benachbarter Gangwindungen des Schneckenganges oder der Schneckengänge verhindert also erfindungsgemäß das Übergreifen zweier Gangwindungen durch zwei benachbarte Schneckenradzähne oder das Aufsetzen der Zahnspitzen des Schneckenrades auf die Spitzen der Gangwindungen und dadurch das Blockieren des Schließens des Deckels. Das gilt insbesondere dann, wenn das Schneckenrad senkrecht oder nahezu senkrecht in die Schnecke taucht.

In einer erfindungsgemäßen Ausgestaltung der Erfindung wird dem Profil der Verzahnung der Schnecke ein Profil der Zahnspitze oder Zahnspitzen der Schnecke überlagert, dessen Steigung jeweils dem Spitzenabstand des Schneckenrades entspricht. Das Profil wird so verschoben dem Verzahnungsprofil der Schnecke überlagert, daß die Gangwindung in der Mitte der Schnecke eine symmetrische Spitze erhält und die benachbarten Gangwindungen oder Schneckengänge jeweils spiegelbildlich eine asymmetrische Spitze. Das überlagerte Profil wird maximal so weit aufgebracht, wie der Betriebswälzkreis der Schnecke reicht. Das überlagerte Profil in der Zahnspitze kann beispielsweise einen Winkel von 110° umfassen. Aufgrund der unterschiedlichen Steigungen zwischen der Steigung der Schneckengänge und der Steigung des Profils, das sich an dem Abstand der Zahnspitzen des Schneckenrads orientiert, ergibt sich eine unterschiedliche Ausbildung der Flanken des Schneckenganges oder der Schneckengänge. Um das senkrechte oder nahezu senkrechte Eintauchen des Schneckenrades in die Schnecke zu erleichtern, ist der Schneckengang in der Mitte der Schnecke symmetrisch ausgebildet, während die benachbarten Spitzen der Gangwindungen oder der anderen Schneckengänge mit fortschreitendem Abstand von dem Schneckengang in der Mitte der Schnecke mehr und mehr asymmetrisch abgeschrägt sind. Gleichgültig, in welcher Stellung die Zähne des Schneckenrades in die Schnecke eintauchen, die Zahnspitzen des Schneckenrades stoßen immer auf die abgeschrägten Zahnflanken der Schneckenzähne. Die zuerst auf eine Zahnflanke auftreffende Zahnspitze des Schneckenrades rutscht auf dem erfindungsgemäßen Profil der Verzahnung der Zahnspitzen ab und das Schneckenrad dreht sich dadurch als der leichter bewegliche Teil so lange, bis daß die Zähne mit dem mindestens einen Schneckengang im Eingriff sind.

Die zum jeweiligen Ende der Schnecke hin auslaufenden Gangwindungen weisen symmetrisch einen abnehmenden Kopfkreisdurchmesser auf. Dadurch wird das Eintauchen des Schneckenrads, insbesondere in eine bereits sich drehende Schnecke, erleichtert. Im mittleren Teil der Schnecke, dort wo die Schneckenradzähne im Eingriff sind, ist dadurch, daß das Profil der Zahnflanken höchstens bis zum Betriebswälzkreis der Schnecke abgetragen wird, gewährleistet, daß das tragende Profil der Gangwindungen groß genug ist.

Anhand eines bevorzugten Ausführungsbeispiels wird die Erfindung näher erläutert.

Es zeigen:
- Fig. 1: eine Spinnstelle einer Rotorspinnmaschine in geschlossenem Zustand,
- Fig. 2: dieselbe Spinnstelle mit aufgeklapptem Deckel,
- Fig. 3: eine Situation des Einklemmens von Schneckengängen, wie sie bei herkömmlichem Verzahnungsprofil der Schnecke auftreten kann und
- Fig. 4: das Schneckenrad im Eingriff mit der erfindungsgemäßen Schnecke.

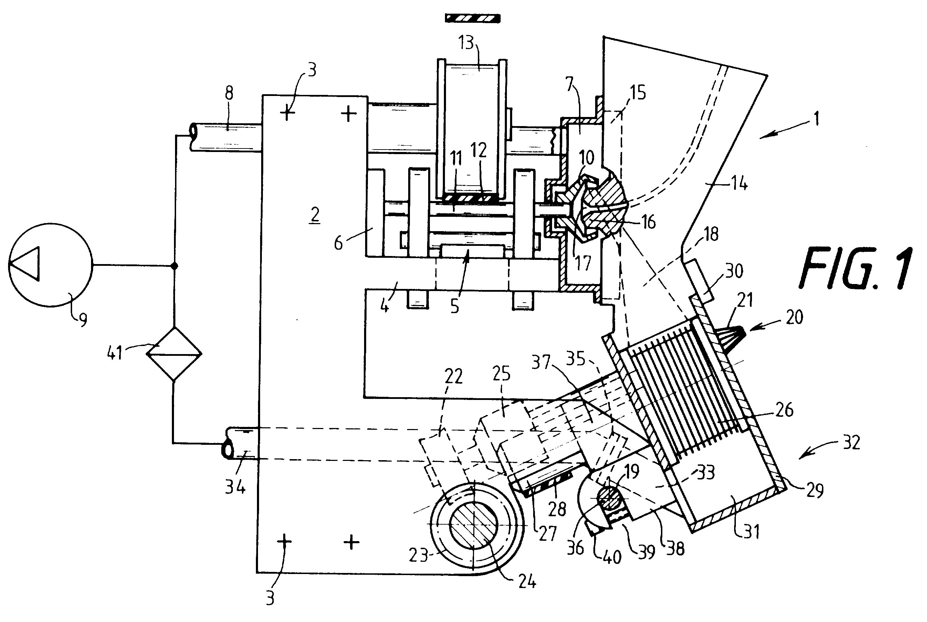

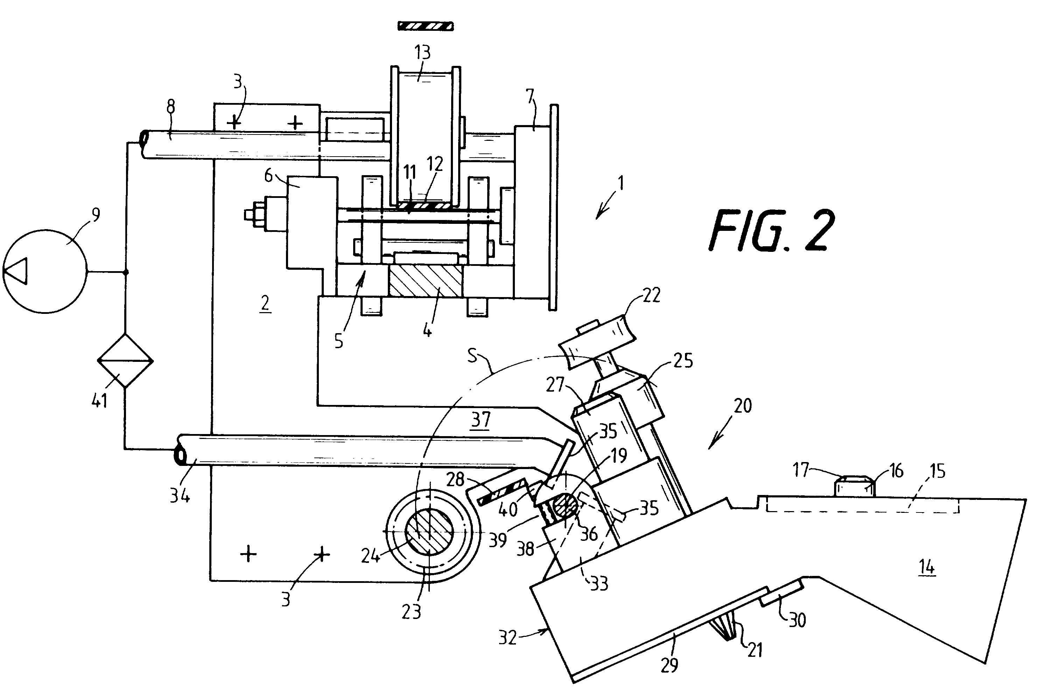

In den Fig. 1 und 2 ist eine Offenend-Spinnvorrichtung dargestellt. Es sind nur die zum Verständnis der Erfindung beitragenden Merkmale dargestellt und beschrieben. Das vorliegende Ausführungsbeispiel zeigt eine Rotorspinnvorrichtung 1 als Offenend-Spinnvorrichtung. Viele solcher Spinnvorrichtungen bilden nebeneinander angeordnet die Arbeitsstellen einer aus dem Stand der Technik bekannten Rotorspinnmaschine.

Wie aus den Fig. 1 und 2 ersichtlich, weisen die Rotorspinnvorrichtungen 1 einen über die Wände 2 der Spinnbox sowie entsprechenden Befestigungselementen 3 an einem hier nicht dargestellten Grundrahmen der Maschine befestigten Tragrahmen 4 auf. An diesem Tragrahmen 4 sind neben einem Stützscheibenlager 5 sowie einem Axiallager 6 ein Rotorgehäuse 7 angeordnet. In dem über eine Saugleitung 8 an einer Unterdruckquelle 9 angeschlossenen Rotorgehäuse 7 läuft ein Spinnrotor 10 um, der mit seiner Rotorwelle 11 im Keilspalt der zwei Stützscheibenpaare 5 gelagert ist. Die Rotorwelle 11 wird dabei, wie aus dem Stand der Technik bekannt, mit dem Untertrum eines Tangentialriemens 12 beaufschlagt, der mittels einer Druckrolle 13 an die Rotorwelle 11 zur Anlage gebracht wird.

Das Rotorgehäuse 7 ist zur Frontseite hin offen und wird durch eine im Deckel 14 befestigte Kanalplatte 15 abgedichtet. Die Kanalplatte 15 weist einen zentrisch angeordneten, die Kanalplatte 15 nach vorne überragenden Ansatz 16 auf. Im Ansatz 16 sind eine Fadenabzugsdüse 17 sowie der Mündungsbereich des Faserleitkanals 18 angeordnet.

Der auf einer Schwenkachse 19 beweglich gelagerte Deckel weist außer der Kanalplatte 15 auch die Einrichtungen 20 zum Zuführen und Auflösen des Faserbandes auf. Im Deckel 14 sind neben einer Einzugswalze 21 für das Faserband, die über ein Schneckenrad 22 angetrieben wird, das mit der Schnecke 23 einer in Maschinenlängsrichtung verlaufenden Antriebswelle 24 in Eingriff ist und über eine Elektrokupplung 25 definiert zuschaltbar ist, eine Auflösewalze 26 sowie ein einteiliger Faserleitkanal 18 untergebracht. Der Wirtel 27 der Auflösewalze 26 wird dabei durch das Trum eines Tagentialriemens 28 angetrieben.

Das Auflösenwalzengehäuse sowie eine unterhalb der Auflösewalze 26 angeordnete Schmutzkammer 31 ist durch einen Deckel 29 verschließbar, der durch einen Riegel 30 gesichert wird. Die unterhalb der Auflösewalze 26 angeordnete Schmutzkammer 31 ist als Teil einer Einzelschmutzabscheidung 32 über einen rückwärtigen Anschlußstutzen 33 an eine Schmutzabsaugleitung 34 angeschlossen, die ihrerseits über eine Filterkammer 41 mit der Unterdruckquelle 9 in Verbindung steht. Der Kupplungsbereich 35 dieser beiden Leitungen liegt bei geschlossener Spinnbox, wie in Fig. 1 dargestellt, knapp oberhalb der Schwenkachse 19.

Die Schwenkachse 19, um die, wie in Fig. 2 angedeutet, das Deckelelement 14 kippbar gelagert ist, wird vorzugsweise durch kurze Bolzen 36 gebildet, die in nach vorne kragenden Auslegern 37 der Wände der Spinnbox 2 angeordnet sind. Die Bolzen 36 sind dabei in schlitzartigen Ausnehmungen 39 gelagert, die an Befestigungslaschen 38 des Deckelelements 14 angeordnet sind. Den in schlitzartigen Ausnehmungen 39 drehbar gehalterten Bolzen 36 werden über Sicherungsmittel 40, im vorliegenden Fall eine Klemmschraube, gesichert.

In Fig. 1 ist der Zustand der Spinnvorrichtung 1 mit geschlossenem Deckel 14 dargestellt. Das Schneckenrad 22, das die hier nicht zu sehende Einzugswalze 21 antreibt, ist mit der Schnecke 23 im Eingriff. Der Wirtel 27, über den die Auflösewalze 26 angetrieben wird, liegt an dem Riemen 28 an.

Fig. 2 zeigt die Spinnvorrichtung 1 mit aufgeklapptem Deckel 14. Der Deckel 14 mit den auf ihm angeordneten Aggregaten wurde dabei um die Schwenkachse 19 geschwenkt. Dabei hob der Wirtel 27 von dem Riemen 28 ab und das Schneckenrad 22 wurde aus der Schnecke 23 gehoben. Es schwenkte auf der eingezeichneten Bahn S in die eingezeichnete Position. In dieser Position ist die Kupplung 25 geöffnet und das Schneckenrad 22 ist nicht mit der verdeckten Einzugswalze 21 gekoppelt.

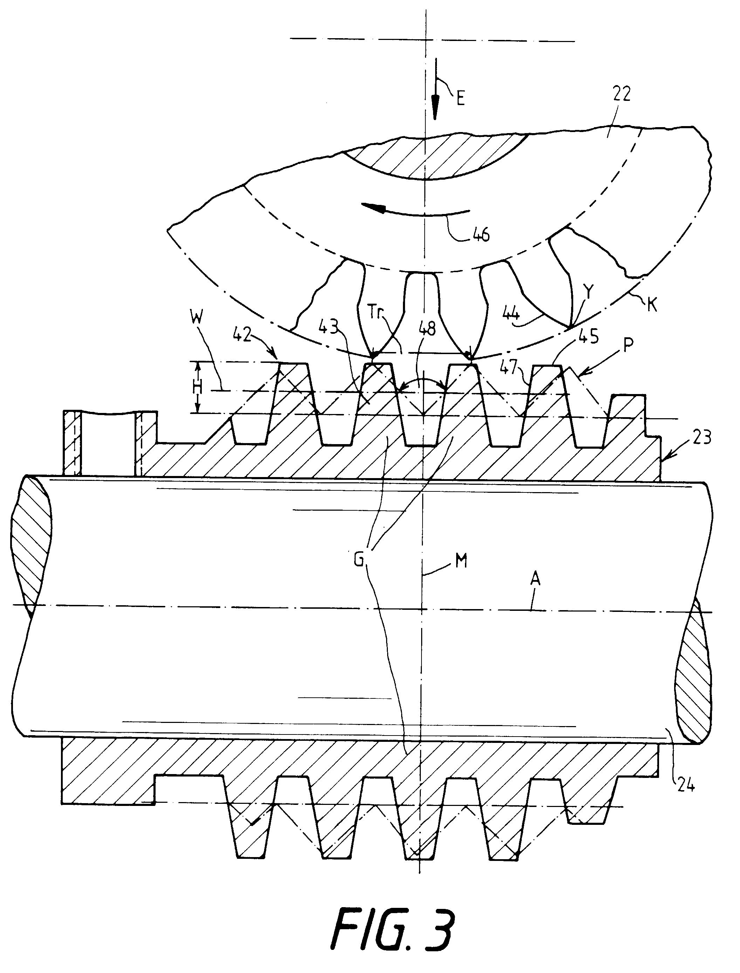

Fig. 3 zeigt eine Situation, bei der das Schneckenrad 22 beim Zuklappen des Deckels 14 eine solche Stellung einnimmt, daß seine Zähne 44 nicht in den Gang oder die Gänge 42 der Schnecke 23 in Pfeilrichtung E eingreifen können. Zur Vereinfachung der Erläuterung der Erfindung sei die dargestellte Schnecke eingängig. Dargestellt ist ein Schnitt durch den Schneckengang 42, so daß die Kontur der jeweiligen Windungen 43 des Ganges 42 sichtbar werden. Wie aus der Darstellung ersichtlich, stehen die Spitzen Y der Zähne 44 des Schneckenrades 22 auf den Stirnflächen 45 der Windungen 43 des Schneckenganges 42. Wird im vorliegenden Ausführungsbeispiel das Schneckenrad in Drehrichtung 46 angetrieben, kann es nicht mit der Schnecke zum Eingriff kommen. Da sich die Antriebswelle 24, auf der die Schnecke 23 aufgeschoben ist, ständig dreht, dreht sich auch die Schnecke 23 während des Schließens des Deckels 14. In der Regel wird bei dem Kontakt des Schneckenrades 22 mit der Schnecke 23 ein Eingriff erfolgen, doch wenn die in Fig. 3 dargestellte Situation eintritt, ist das Einführen des Schneckenrades in die Schnecke so gut wie unmöglich und bei einer unsachgemäßen Behandlung kann es zu Beschädigung der Verzahnung kommen.

In Fig. 3 ist gestrichelt das erfindungsgemäße Überlagerungsprofil P eingezeichnet, das dem Profil des Schneckenganges der Schnecke überlagert ist. Die stumpfe Spitze 45 des Schneckenganges 42 wird so überdreht, daß das Profil der einzelnen Windungen 43 der Schnecke 23 unterschiedliche spitz zuläuft. Die Spitzen Z der Windungen 43 der Schnecke haben jeweils einen Abstand T voneinander, der dem Abstand Tr der Zahnspitzen Y des Schneckenrades 22 entspricht. Der Abstand Tr entspricht der Teilung der Zähne auf dem Umfang, dem Kopfkreis K, des Schneckenrades. Das Überlagerungsprofil P richtet sich in seiner Steigung nach dem Abstand der Zahnspitzen Y auf dem Umfang des Schneckenrades 22, also nach der Teilung Tr des Schneckenrades 22 auf seinem Kopfkreis K. Die Konturgebung der Zahnflanken 47 des Schneckenganges 42 der Schnecke 23 erfolgt beispielsweise durch Einstechen mittels eines Drehmeißels auf einer Drehbank in die Schnecke so, daß die mittlere Schneckenwindung G, die Schneckenwindung in der Mitte M der Schnecke, ein symmetrisches Zahnprofil erhält, das spiegelbildlich ausgeführt ist. Es ist vorteilhaft, wenn das gesamte überlagernde Profil eine spiegelbildliche Kontur so auf dem Schneckengang abträgt, daß die der Schneckenwindung G in der Mitte M der Schnecke benachbarten Schneckenwindungen jeweils spiegelbildlich eine asymmetrische Spitze erhalten. Als Mitte M der Schnecke 23 wird die Symmetrieebene zu den Schneckenwindungen 42 bezeichnet, die senkrecht auf der Mittellinie A der Antriebswelle 24 steht. Der Winkel 48 zwischen den beiden Profilflächen Pl und Pr kann in bezug auf die Mittellinie M der der Schnecke 23 symmetrisch sein, er kann aber auch asymmetrisch sein, so daß eine der Profilflächen kleiner ist als die andere. Im vorliegenden Ausführungsbeispiel sind die Profilflächen Pl und Pr gleichgroß und der Winkel 48 ist symmetrisch. Die Profilhöhe H des überlagerten Profils P ist so gewählt, daß in der Mitte M der Schnecke die beiden benachbarten Schneckenwindungen nur bis zu der Höhe abgetragen werden, wie der Betriebswälzkreis W reicht. Durch einen anderen Winkel 48 zwischen den Profilflächen Pl und Pr kann eine andere Profilgebung der Zahnflanken 47 der Windungen 43 des Schneckenganges 42 erreicht werden. Geachtet werden muß nur darauf, daß der Abstand T der Spitzen Z der Windungen 43 der Schnecke 23 nicht kleiner ist als die Teilung Tr an den Spitzen Y der Zähne 44 des Schneckenrades 22.

Anhand der Fig. 3 ist ersichtlich, daß bei einer Schnecke 23 mit dem überlagerten Profil P keine Hemmung des Schneckenrades 22 beim Eintauchen des Schneckenrades 22 in Pfeilrichtung E in die Schnecke auftritt. Die Spitzen Y des Schneckenrades 22 treffen nicht mehr auf die stumpfen Stirnflächen 45 der Windungen 43 des Schneckenganges 42 der Schnecke 23, sondern entweder auf die Profilflächen Pl oder Pr. Sollte eine Spitze Y eines Zahnes 44 des Schneckenrades 22 auf eine Spitze Z einer Windung 43 der Schnecke 23 auftreffen, so gleiten sie trotzdem beim Aufsetzen aneinander vorbei, weil die Spitzen jeweils einen kleinen Radius aufweisen. Insbesondere dann, wenn die Schnecke läuft, gleiten aufgrund der Radien die Spitzen aufeinander ab. Die abgleitenden Spitzen Y der Zähne 44 des Schneckenrades 22 treffen dann auf die schrägverlaufenden Profilflächen Pl beziehungsweise Pr und gleiten somit in den Schneckengang der Schnecke. Schneckenrad 22 und Schnecke 23 kommen dadurch stets in Eingriff, gleichgültig, wie die Spitzen Y der Zähne 44 des Schneckenrades 22 auf das Profil des Schneckenganges 42 der Schnecke auftreffen.

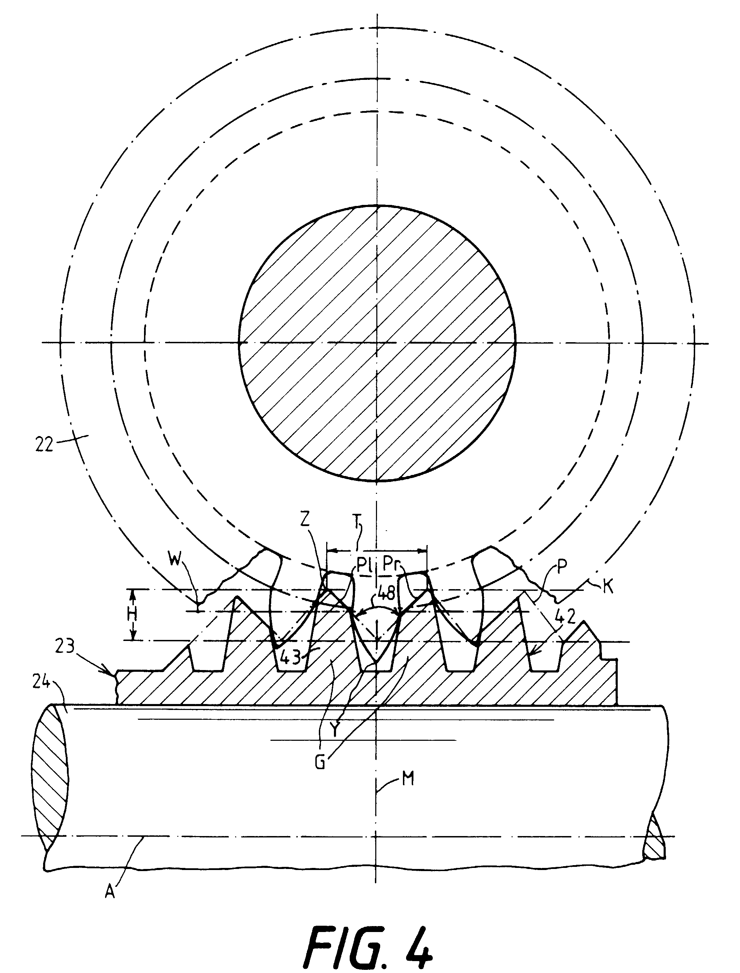

Fig. 4 zeigt eine Schnecke 23, deren Gang 42 mit Hilfe des überlagerten Profils P bearbeitet worden ist. Im Eingriff befindet sich das Schneckenrad 22. Deutlich zu sehen ist, daß die Profilüberlagerung symmetrisch zur Schneckenmitte M erfolgt, so daß dort, wo die Schnecke das Schneckenrad antreibt, die Zahnflanken 47 der Windungen 43 des Schneckenganges 42 der Schnecke eine genügend große tragende Fläche aufweisen. Zu den Enden der Schnecke 23 hin nimmt die Höhe des Schneckenganges 42 ab, obwohl die Höhe H des überlagerten Profils P gleich bleibt. Das Eintauchen des Schneckenrads 22 in die Schnecke 23 wird dadurch erleichtert.

## Patentansprüche

1. Offenend-Spinnvorrichtung an einer Spinnmaschine zum kontinuierlichen Verspinnen von Textilfasern, die über jeweils eine Zuführ- und eine Auflöseeinrichtung dem Spinnrotor zugeführt werden, wobei die Zuführ- und Auflöseeinrichtung in einem schwenkbar gelagerten, den Spinnrotor abdeckenden Deckel (14) angeordnet sind, dessen Schwenkachse (19) rechtwinklig zur Rotorachse ausgerichtet ist und wobei der Antrieb der Einzugswalze (21) der Zuführeinrichtung mittels eines Schneckengetriebes (22,23) erfolgt und die Einzugswalze (21) auf ihrer Antriebswelle ein Schneckenrad (22) trägt, das bei geschlossenem Deckel (14) mit einer Schnecke (23) im Eingriff steht, die auf einer ortsfest eingebauten Welle (24) sitzt, die sich in Längsrichtung der Spinnmaschine erstreckt und von der eine Vielzahl von Einzugswalzen (21) antreibbar ist,
dadurch gekennzeichnet,
daß das Schneckenrad (22) beim Schließen des Deckels (14) zumindest annähernd senkrecht in die antreibende Schnecke (23) taucht, daß die Stirnseiten (45) der Windungen (43) des mindestens einen Schneckenganges (42) der Schnecke (23) durch zusätzliche Formgebung (P) der Flanken (47) spitz zulaufend ausgebildet sind und daß der Abstand (T) zwischen den Spitzen (Z) zweier benachbarter Windungen (43) des mindestens einen Schneckenganges (42) höchstens so groß gewählt ist wie der Abstand (Tr) zweier Spitzen (Y) der Zähne (44) des Schneckenrades (22) auf seinem Kopfkreis (K), so daß weder zwei benachbarte Spitzen (Y) des Schneckenrades (22) zwischen benachbarte Spitzen (Z) des Schneckenganges (42), noch zwei benachbarte Spitzen (Z) des Schneckenganges (42) zwischen benachbarte Spitzen (Y) des Schneckenrades (22) eingeklemmt werden können.

2. Offenend-Spinnvorrichtung nach Anspruch 1, dadurch gekennzeichnet, daß das Schneckenrad (22) beim Schließen des Deckels (14) senkrecht oder nahezu senkrecht in die antreibende Schnecke (23) taucht.

3. Offenend-Spinnvorrichtung nach Anspruch 1 oder 2, dadurch gekennzeichnet, daß das dem Profil (43) des mindestens einen Schneckenganges (42) der Schnecke (23) überlagerte Profil (P) eine Steigung aufweist, die dem Abstand (Tr) der Spitzen (Y) der Zähne (44) des Schneckenrades (22) auf seinem Kopfkreis (K) entspricht.

4. Offenend-Spinnvorrichtung nach Anspruch 3, dadurch gekennzeichnet, daß das Profil (P) so verschoben dem Verzahnungsprofil des mindestens einen Schneckenganges (42) überlagert ist, daß die benachbarten Windungen(43) der mittleren Schneckengangwindung (G) jeweils eine symmetrisch ausgebildete Spitze (Z) aufweisen, wobei die sich zugewandten Profilflächen (Pl, Pr) gleich groß sind und daß die der mittleren Schneckengangwindung (G) benachbarten Schneckengangwindungen jeweils spiegelbildlich eine asymmetrisch ausgebildete Spitze (Z) aufweisen.

5. Offenend-Spinnvorrichtung nach Anspruch 3 oder 4, dadurch gekennzeichnet, daß der Winkel (48) zwischen den beiden Profilflächen (Pl, Pr) des Überlagerungsprofils (P) in bezug auf die Mittellinie (M) der Schnecke (23) symmetrisch ist.

6. Offenend-Spinnvorrichtung nach einem der Ansprüche 1 bis 5, dadurch gekennzeichnet, daß die Profilhöhe (H) des überlagerten Profils (P) so gewählt ist, daß auf der mittleren Schneckengangwindung (G) zur Bildung der Spitzen (Z) die Zahnflanken (47) höchstens bis zum Betriebswälzkreis (W) der Schnecke (23) abgetragen sind.

## Claims

1. Open-end spinning device on a spinning machine for continuously spinning textile fibres which are fed to the spinning rotor via a feeding and a disentangling means, the feeding and disentangling means being disposed in a pivotally mounted cover (14) which masks the spinning rotor and of which the pivot axis (19) is at right-angles to the rotor axis, the drive of the draw-in roller (21) of the feed means being provided by a worm gear mechanism (22, 23), the draw-in roller (21) carrying on its drive shaft a worm wheel (22) which, when the cover (14)is closed, meshes with a worm (23) seated on a rigidly installed shaft (24) which extends in the longitudinal direction of the spinning machine and by which a plurality of draw-in rollers (21) can be driven, characterised in that, when the cover (14) is closed, the worm wheel (22) engages the driving worm (23) at right-angles or virtually at right-angles and in that the end faces (45) ofthe turns (43) on the at least one worm thread (42) on the worm (23) are constructed to converge acutely by additional shaping (P) of the flanks (47) and in that the distance (T) between the tips (Z) of two adjacent turns (43) of the at least one worm thread (42) is at most as great as the distance (Tr) between two tips (Y) of the teeth (44) of the worm wheel (22) on its addendum line (K), so that neither two adjacent tips (Y) of the worm wheel (22) can become jammed between adjacent tips (Z) on the worm thread (42) nor two adjacent tips (Z) of the worm thread (22) can be become jammed between adjacent tips (Y) of the worm wheel (22).

2. An open-end spinning device according to claim 1, characterised in that when the cover (14) is closed, the worm wheel (22) engages the driving worm (23) at a right-angle or virtually at a right-angle.

3. An open-end spinning device according to claim 1 or 2, characterised in that the profile (P) superimposed on the profile (43) of the at least one worm thread (42) on the worm (23) has a pitch which corresponds to the distance (Tr) between the tips (Y) of the teeth (44) on the worm wheel (22) at its addendum line (K).

4. An open-end spinning device according to claim 3, characterised in that the profile (P) is superimposed on the teeth profile of the at least one worm thread (42) with a displacement such that the adjacent turns (43) of the middle worm thread turn (G) respectively have a symmetrically constructed tip (Z), the mutually facing profile faces (P1, Pr) being of the same size and in that each of the worm thread turns adjacent the middle worm thread turn (G) has, in mirrored opposite relationship, an asymmetrically constructed tip (Z).

5. An open-end spinning device according to claim 3 or 4, characterised in that the angle (48) between the two profile faces (P1, Pr) of the superimposed profile (P) is symmetrical in relation to the central line (M) of the worm (23).

6. An open-end spinning device according to one of claims 1 to 5, characterised in that the height (H)of the superimposed profile (P) is so chosen that on the central worm thread turn (G), the tooth flanks (44) are machined off not more than as far as the working pitch circle (W) ofthe worm (23) in order to form the tips (Z).

## Revendications

1. Dispositif de filature à bout ouvert sur un métier à filer pour filer entre elles en continu des fibres textiles qui sont apportées au rotor de filature par des dispositifs respectifs d'alimentation et de séparation, le dispositif d'alimentation et le dispositif de séparation étant disposés dans un couvercle (14) monté à pivotement, qui recouvre le rotor de filature et dont l'axe de pivotement (19) est orienté perpendiculairement à l'axe du rotor, et l'entraînement du cylindre de chargement (21) du dispositif d'alimentation s'effectuant au moyen d'un engrenage à vis sans fin (22, 23), le cylindre de chargement (21) portant sur son arbre d'entraînement une roue à vis (22) qui, lorsque le couvercle (14) est fermé, est en prise avec une vis sans fin (23) qui est montée sur un arbre (24) installé stationnairement, qui s'étend dans la direction longitudinale du métier à filer et qui permet d'entraîner une multiplicité de cylindres de chargement (21),
**caractérisé** en ce que la roue à vis (22), lors de la fermeture du couvercle (14), s'enfonce au moins approximativement perpendiculairement dans la vis sans fin entraîneuse (23), en ce que les côtés frontaux (45) des spires (43) du ou des pas de vis (42) de la vis sans fin (23) sont configurés en se terminant en pointe par une conformation supplémentaire (P) des flancs (47), et en ce que la distance (T) entre les pointes (Z) de deux spires voisines (43) du ou des pas de vis (42) est choisie au plus égale à la distance (Tr) entre deux pointes (Y) des dents (44) de la roue à vis (22) sur son cercle de tête (K), de sorte que deux pointes voisines (Y) de la roue à vis (22) ne peuvent pas être coincées entre des pointes voisines (Z) du pas de vis (42), tout comme deux pointes voisines (Z) du pas de vis (42) ne peuvent pas être coincées entre des pointes voisines (Y) de la roue à vis (22).

2. Dispositif de filature à bout ouvert selon la revendication 1, **caractérisé** en ce que la roue à vis (22), lors de la fermeture du couvercle (14), s'enfonce perpendiculairement ou quasiment perpendiculairement dans la vis sans fin entraîneuse (23).

3. Dispositif de filature à bout ouvert selon la revendication 1 ou 2, **caractérisé** en ce que le profil (P) superposé au profil (43) du ou des pas de vis (42) de la vis sans fin (23) présente une pente qui correspond à la distance (Tr) entre les pointes (Y) des dents (44) de la roue à vis (22) sur son cercle de tête (K).

4. Dispositif de filature à bout ouvert selon la revendication 3, **caractérisé** en ce que le profil (P) est superposé au profil de denture du ou des pas de vis (42) en étant décalé de telle sorte que les spires voisines (43) de l'enroulement médian (G) du pas de vis présentent des pointes respectives (Z) de configuration symétrique, les faces de profil (PI, Pr) en vis-à-vis étant de même taille, et que les enroulements du pas de vis qui sont voisins de l'enroulement médian (G) du pas de vis présentent, en disposition inverse, des pointes respectives (Z) de configuration asymétrique .

5. Dispositif de filature à bout ouvert selon la revendication 3 ou 4, **caractérisé** en ce que l'angle (48) entre les deux faces de profil (PI, Pr) du profil superposé (P) est symétrique par rapport à l'axe médian (M) de la vis sans fin (23).

6. Dispositif de filature à bout ouvert selon une des revendications 1 à 5, **caractérisé** en ce que la hauteur de profil (H) du profil superposé (P) est choisie telle que, sur l'enroulement médian (G) du pas de vis, afin de former les pointes (Z), les flancs de dents (47) sont entamés au plus jusqu'au cercle primitif de référence en service (W) de la vis sans fin (23).
